# FASCICULE DE BREVET EUROPEEN

(11) **EP 0 359 614 B1**
(45) Date de publication et mention de la délivrance du brevet: **15.12.1993**
(21) Numéro de dépôt: 89402354.8
(22) Date de dépôt: 29.08.1989
(51) Int. Cl.: C04B 41/89, B64G 1/58

(54) **Matériau composite à fibres de renforcement en carbone et son procédé de fabrication**
Mit Kohlenstoffasern bewehrtes Verbundmaterial und Verfahren zu seiner Herstellung
Composite material containing reinforcing carbon fibres, and process for its production

(30) Priorité: 31.08.1988 FR 8811401
(43) Date de publication de la demande: 21.03.1990
(73) Titulaire: AEROSPATIALE Société Nationale Industrielle, 75781 Paris Cédex 16 (FR)
(72) Inventeur: Rousseau, Gérard, F-33160 Saint Aubin de Medoc (FR)
(74) Mandataire: Mongrédien, André

(56) Documents cités:
- EP-A- 0 106 817
- EP-A- 0 121 797
- EP-A- 0 200 991
- US-A- 3 019 128
- US-A- 4 500 602
- US-A- 4 671 997
- CHEMICAL ABSTRACTS, vol. 91, no. 18, octobre 1979, page 255, résumé no. 144904z, Columbus, Ohio, US; A. DROZNIAK: "Protective thorium oxide coatings obtained by plasma deposition" & ZESZ. NAUK. AKAD. GORN.-HUTN. IM- SANISLAWA STASZICA, ZESZ. SPEC. 1978, 58, 245-51

## Description

La présente invention se rapporte à un matériau composite du type carbone-carbone rendu inoxydable jusqu'à une température de 1800°C, sous une faible pression d'air, ainsi qu'à son procédé de fabrication.

Ce matériau composite est plus particulièrement destiné à être utilisé comme protection thermique de haute performance pour des véhicules spatiaux (navette ou aéronefs) devant résister aux échauffements provoqués par le frottement de l'air lors de leur entrée à grande vitesse dans l'atmosphère.

Toutefois, l'invention s'applique aussi dans d'autres secteurs industriels nécessitant l'utilisation de structures capables de résister à des contraintes mécaniques élevées sous des températures supérieures à 1100°C en milieu corrosif. Ceci est en particulier le cas des moteurs de turbine à rendement amélioré travaillant à haute température (entre 1300 et 1400°C) et de certains récupérateurs de chaleur industriels.

Le problème majeur des matériaux composites du type carbone-carbone est leur oxydation dans l'air à haute température, entraînant la transformation du carbone en CO ou CO₂ et donc la dégradation, voire même la destruction, du matériau composite. Pour éviter cette oxydation, différents procédés ont déjà été envisagés concernant la protection des matériaux carbonés basée sur l'utilisation d'un revêtement de carbure de silicium (SiC) formé à la surface externe des pièces en matériau composite.

Ce revêtement externe en SiC peut être obtenu par siliciuration du carbone de la partie externe du matériau. Cette siliciuration est réalisée par "Pack-cementation" comme décrit dans le document US-A-3 095 316 soit par dépôt chimique en phase vapeur (DCPV). Le dépôt de SiC par DCPV peut être réalisé en déposant une couche de silicium sur la partie externe du matériau puis fusion du silicium afin d'assurer sa diffusion dans le matériau et réagir avec le carbone de ce dernier pour former le SiC, comme décrit dans les documents US-A-3 406 044 et US-A-3 925 577.

Ce revêtement externe de SiC peut aussi être réalisé directement par dépôt de SiC à partir du craquage de vapeurs de chloro-silane, seul ou associé à de l'hydrogène ou des hydrocarbures comme décrit dans l'article de S. Audisto dans l'Actualité Chimique de septembre 1978, pp. 25-33.

D'autres techniques associent la siliciuration du carbone superficiel du matériau composite à un dépot chimique en phase vapeur (voir à cet effet les brevets US-A-3 406 044, US-A-4 425 407 et US-A-4 476 178).

Toutes les techniques précédentes de fabrication d'une couche de SiC sur les matériaux composites du type carbone-carbone conduisent à l'obtention d'une couche fissurée du fait de l'écart des coefficients de dilatation entre le carbone et le carbure de silicium. Aussi, pour remédier à cet inconvénient, on a associé au revêtement externe en SiC un revêtement de silice destiné à colmater les fissures du revêtement en SiC (voir le document "Weight uncertainty analysis for space shattle re-inforced carbon-carbon" -Sawepaper 1275-37th Annual Conference 8.10 mai 1978).

Afin d'améliorer le colmatage des fissures de la couche SiC, on a aussi envisagé l'utilisation d'un revêtement à base de poudre de SiC et d'un verre à base de silicate de sodium additionné éventuellement de borate de sodium ou à base de phosphate d'aluminium et de poudre d'alumine, comme décrit dans les documents US-A-4 500 602 et US-A-4 565 777. Ces verres ont pour but d'abaisser la température de 1200-1300°C à 800°C à partir de laquelle le colmatage des fissures du revêtement en SiC devient efficace.

Le même type de résultat est obtenu en rajoutant du bore lors de la formation de la couche de SiC par "pack-cémentation" (voir brevet US-A-4 476 164). Le verre qui se forme naturellement sur le SiC chauffé dans l'air, par exemple lors de la rentrée des véhicules spatiaux dans l'atmosphère, est un boro-silicate à plus bas point de fusion que le dioxyde de silicium.

Enfin, le colmatage du revêtement externe en SiC par du dioxyde de silicium puis par un verre à base de silicate et de borate est en particulier décrit dans le document EP-A-133 315.

Toutes les protections ci-dessus sont donc basées sur l'utilisation d'un revêtement externe en SiC complété par des verres de silice associés à B₂O₃, Na₂O et P₂O₅.

Ces protections fonctionnent correctement jusqu'à des températures de l'ordre de 1700°C à la pression atmosphérique. En revanche, sous pression réduite, la température de fonctionnement de ces matériaux est limitée par la réaction de la silice (SiO₂) sur le carbure de silicium correspondant à l'équation suivante :

SiC + SiO₂ → 2 SiO + CO

En effet, les vapeurs de monoxyde de silicium et de monoxyde de carbone produites percent la couche de silice visqueuse lorsque la pression engendrée dépasse celle de l'atmosphère extérieure, soit :
2,9 KPa à 1500°C
10 KPa à 1600°C
32,6 KPa à 1700°C
92,0 KPa à 1800°C.

Ces conditions sont celles de la silice seule.

Aussi, l'invention a pour objet un matériau composite à fibres de renforcement en carbone revêtu d'un revêtement externe en carbure de silicium colmaté par un matériau susceptible de supporter des températures plus élevées sous des pressions réduites telles que des températures de 1800°C sous 2,8 KPa ou de 2000°C sous 20 Kpa.

En particulier, le matériau selon l'invention peut être utilisé pour équiper certaines zones des véhicules spatiaux plus sollicitées que d'autres, tel que le nez, les ailerons et les bords d'attaque alors que les autres parties de ces véhicules pourront être réalisées selon l'art antérieur.

De façon plus précise, l'invention a pour objet un matériau composite comportant un substrat de fibres de carbone noyé dans une matrice, un revêtement externe en carbure de silicium et un recouvrement de ce revêtement externe, caractérisé en ce que le recouvrement comprend une couche externe en un oxyde choisi parmi ThO₂, ZrO₂, HfO₂, La₂O₃, Y₂O₃ et Al₂O₃ et une couche intermédiaire en un composé ne contenant pas de silicium servant de barrière de réaction entre le carbure de silicium et l'oxyde.

L'oxyde a pour but d'empêcher, à haute température et pression réduite, le passage de l'oxygène du fait de sa bonne étanchéité et de sa grande réfractérité.

De préférence, on utilise l'alumine du fait de son meilleur coefficient de diffusion de l'oxygène. Le coefficient de diffusion de l'oxygène dans l'alumine à 1200°C est de 3.10⁻¹⁶cm²/s, soit 100 fois plus faible que celui de la silice qui est de 3.10⁻¹⁴ cm²/s.

Tout matériau peu réactif avec le carbure de silicium et avec les oxydes cités ci-dessus et ayant une bonne adhérence sur ces derniers peut être utilisé comme couche intermédiaire. A cet effet, on peut citer les carbures, les nitrures, les borures, voire même certains métaux nobles (Ir). De préfèrence, on utilise les nitrures, carbures et borures tels que : HfC, TaC, ZrC, W₂C, NbC, ThC₂, ZrB₂, HfB₂, TiB₂, BN, HfN, ZrN, AlN ; et certains métaux nobles de la mine du platine tels que Pt, Ir, Os, Rh et Ru.

Aussi, l'invention a encore pour objet un matériau composite comportant un substrat de fibres de carbone noyé dans une matrice, un revêtement externe en carbure de silicium et un recouvrement du revêtement externe, caractérisé en ce que le recouvrement comprend une couche externe d'oxyde et une couche intermédiaire ne contenant pas de silicium servant de barrière de réaction entre le carbure de silicium et l'oxyde, cette couche intermédiaire étant choisie parmi HfC, TaC, ZrC, W₂C, NbC, ThC₂, ZrB₂, HfB₂, TiB₂, BN, HfN, ZrN, AlN, Pt, Ir, Os, Rh et Ru.

Par composé ne contenant pas de silicium, il faut comprendre un composé ne contenant pas intentionnellement du silicium. En particulier, la couche barrière n'est pas du silicium, ni un nitrure, ni un carbure, ni un borure de silicium. En outre, la couche d'oxyde n'est pas en SiO ni en SiO₂.

L'utilisation d'une couche externe en alumine et d'une couche intermédiaire selon l'invention permet un gain de 300°C à pression comparable par rapport au système antérieur verre de silice seul. En effet, ces systèmes permettent d'abaisser la pression totale des gaz à l'interface avec Al₂O₃. Par exemple ces composés ont les valeurs de pression, à 1800°C, ci-dessous :

| Interface | Pression à 1800°C |
|---|---|
| ZrC | 2,25 KPa |
| ZrB₂ | 0,11 KPa |
| HfC | 2 KPa |
| HfN | 2 KPa |
| TaC | 1,2 KPa |
| W₂C | 0,29 KPa |
| TiB₂ | 0,06 KPa |
| BN | 1 KPa |
| AlN | 2,7 KPa |

Plus particulièrement avec AlN-Al₂O₃, on obtient à différentes températures les valeurs de pression suivantes :
moins de 0,1 KPa à 1500°C,
0,72 KPa à 1700°C,
2,8 KPa à 1800°C,
9 KPa à 1900°C,
20 KPa à 2000°C.

L'utilisation d'une couche intermédiaire en nitrure d'hafnium est légèrement plus favorablement qu'une couche de nitrure d'aluminium. En effet, à 1800°C la pression est de 2 Kpa. En revanche, le coefficient de dilatation du nitrure d'hafnium est légèrement moins favorable que celui d'AlN, soit 6,2.10⁻⁶/°C au lieu de 4.10⁻⁶/°C.

Le revêtement externe en carbure de silicium, formé à haute température, d'au plus 600 micromètres d'épaisseur, recouvrant toutes les surfaces externes du matériau composite assure l'étanchéité de ce dernier à la pénétration de gaz oxydant et en particulier d'oxygène. Ce revêtement étant fissuré pour colmater de façon efficace les fissures de ce revêtement externe, un colmatage en carbure de silicium réalisé à basse température peut être prévu entre la couche barrière et le revêtement externe de SiC.

La matrice du matériau composite peut être réalisée en carbone vitreux ou en graphite, éventuellement dopé avec ou carbure de silicium finement divisé. Dans ce dernier cas, la matrice contient au plus 20% en poids de carbure de silicium et de préférence de 2 à 10% en poids. Cette faible proportion de SiC dans la matrice, tout en assurant une protection efficace anti-oxydation, ne modifie en rien les propriétés physiques de la matrice de carbone.

L'invention a aussi pour objet un procédé de fabrication d'un matériau composite tel que défini précédemment. Aussi, selon une caractéristique principale, ce procédé comprend les étapes suivantes :
(a) formation d'un substrat poreux déformable, constitué de fibres de carbone,
(b) mise en forme du substrat,
(c) densification du substrat mis en forme pour constituer la matrice,
(d) recouvrement de la surface externe de la matrice par un revêtement externe en carbure de silicium,
(e) dépôt d'une couche intermédiaire ne contenant pas de silicium servant de barrière de réaction entre le carbure de silicium et un oxyde,
(f) recouvrement du revêtement externe par une couche externe en un oxyde choisi parmi ThO₂, ZrO₂, HfO₂, La₂O₃, Y₂O₃ et Al₂O₃.

L'invention a encore pour objet un procédé de fabrication d'un matériau composite comportant un substrat en fibres de carbone noyé dans une matrice, caractérisé en ce qu'il comprend les étapes suivantes :
(a) formation d'un substrat poreux déformable, constitué ue fibres de carbone,
(b) mise en forme du substrat,
(c) densification du substrat mis en forme pour constituer la matrice,
(d) recouvrement de la surface externe de la matrice par un revêtement externe en carbure de silicium,
(e) dépôt d'une couche intermédiaire servant de barrière de réaction entre le carbure de silicium et un oxyde, cette couche intermédiaire étant choisie parmi HfC, TaC, ZrC, W₂C, NbC, ThC₂, ZrB₂, HfB₂, TiB₂, BN, HfN, ZrN, AlN, Pt, Ir, Os, Rh et Ru,
(f) recouvrement du revêtement externe par une couche d'oxyde ne contenant pas de silicium.

Le substrat fibreux du matériau composite peut être formé de fibres de carbone ou de graphite, obtenues à partir de n'importe quel précurseur et en particulier, à partir de polyacrylonitrile (P.A.N.), de brai ou de rayonne. Par ailleurs, selon les propriétés finales recherchées pour le matériau composite, ces fibres peuvent être courtes ou longues, de haute résistance ou de haut module et avoir subi des traitements éventuels de graphitation. Le substrat fibreux est obtenu par tissage ou enroulement filamentaire de fibres de carbone suivant une, deux ou trois ou N directions.

Selon une mise en oeuvre préférée du procédé de l'invention, on forme le revêtement externe en carbure de silicium par siliciuration de la surface externe de la structure densifiée. Cette siliciuration permet de former une couche de SiC parfaitement adhérente à la matrice. En particulier, la siliciuration est réalisée par la technique de "pack-cémentation", c'est-à-dire que le matériau à siliciurer est immergé dans un mélange de poudres qui dégage par chauffage les vapeurs des espèces siliciurantes qui sont le silicium et/ou le monoxyde de silicium.

Les mélanges de poudres utilisables pour fournir le silicium et le SiO sont constitués de carbure de silicium et d'au moins un oxyde quelconque apte à réagir avec le carbure de silicium pour fournir du monoxyde de silicium. L'oxyde utilisé est en particulier la silice ou l'alumine.

Avec un mélange de SiC+SiO₂, on forme essentiellement, vers 1650°C, du SiO et, vers 1800°C, un mélange de vapeurs de SiO et de silicium. Eventuellement, on peut ajouter à ce mélange un excès de carbure de silicium afin de diluer les éléments réactifs et empêcher ainsi, lors de la fusion de la silice qu'elle n'agglomère le mélange ; le taux de silice peut être en quantité telle qu'elle soit entièrement consommée.

Avec un mélange de SiC+Si+Al₂O₃, on obtient des vapeurs de silicium et de SiO avec une nette prépondérance de vapeurs de silicium. Ce mélange contient en général de 8 à 10% en poids d'alumine, de 25 à 35% en poids de silicium et de 55 à 60% en poids de carbure de silicium.

Le choix du mélange de poudres est fonction de la nature du matériau composite utilisé. Avec les matériaux peu denses, constitués de fibres peu graphitées et de matrice vitreuse (ou peu graphitée), le mélange préféré est SiC+Si+Al₂O₃ alors qu'avec des matériaux plus denses, constitués à partir de fibres très graphitées et de matrices graphitables (carbone DCPV ou brai), le mélange SiC+SiO₂ est préférable ; ce dernier contient en principe de 50 à 75% en poids de SiC et de 50 à 25% en poids de SiO₂.

Cette différence est liée aux réactions de siliciuration impliquées avec chacune des vapeurs siliciurantes.

Avec le silicium, on a

Si + C → SiC et

avec le monoxyde de silicium, on a

SiO + 2 C → SiC + CO.

Ces équations indiquent que la variation de volume est deux fois moindre avec le SiO qu'avec le silicium.

A titre d'exemple, un matériau composite de densité 1,4, présente un gonflement de 1,45 avec le silicium et de 0,73 avec SiO. Dans ce dernier cas, le revêtement serait donc poreux et un mélange de vapeurs de silicium et de vapeurs de SiO doit être utilisé de préférence.

La siliciuration superficielle du matériau composite est effectuée en présence d'un gaz neutre tel que l'hélium ou l'argon.

La durée de l'immersion de la structure densifiée dans le mélange de poudres, à la température choisie, permet de fixer l'épaisseur de la couche de SiC, cette dernière ayant une épaisseur allant de 200 à 600µm.

La siliciuration permet certes la formation d'un revêtement superficiel de 200 à 600 µm d'épaisseur en SiC, mais aussi la formation d'une couche sous-jacente en composite carbone/carbure de silicium de 40 à 200 µm, résultant de la siliciuration préférentielle du carbone de la matrice, le carbone des fibres n'étant que partiellement siliciuré. Cette couche sous-jacente assure une bonne adhérence du revêtement externe de SiC sur le carbone de la matrice, empêchant ainsi un éventuel décollement du revêtement externe.

Par suite d'une différence entre les coefficients de dilatation du carbone de la matrice et ou SiC du revêtement externe, ce dernier est fissuré.

Aussi, on peut envisager un colmatage de ces fissures avec du carbure de silicium déposé directement par dépôt chimique en phase vapeur et donc à des températures plus basses que la siliciuration (soit de 600 à 1000°C) améliorant ainsi l'étanchéité de la protection à basse température. Un dépot par DCPV assité-plasma permet un colmatage vers 600°C.

Ces dépots chimiques en phase vapeur se font par craquage d'un ou plusieurs organosilanes substitués ou non par un halogène auxquels on associe éventuellement un ou plusieurs hydrocarbures gazeux et/ou de l'hydrogène.

Les organosilanes utilisables sont en particulier les chlorosilanes de forme (CH₃)ₙSiCl₍₄₋ₙ₎ avec 0≦n≦4. On peut par exemple citer le trichlorométhylsilane, le tétraméthylsilane, le dichlorodiméthylsilane. Les hydrocarbures utilisables sont en particulier le méthane, l'éthane, le propane et le butane.

De préférence, on utilise le mélange gazeux contenant du trichlorométhylsilane et de l'hydrogène dans un rapport [H₂]/[CH₃SiCl₃] = 4 à 12.

Toutefois, d'autres mélanges peuvent être utilisés tel que le trichlorométhylsilane en présence de butane et d'hydrogène dans les rapports :

[H₂]/[CH₃SiCl₃] = 1 à 8 et [C₄H₁₀]/[CH₃SiCl₃] = 1 à 5

ou encore le trichlorométhylsilane seul.

Les températures (de 600 à 1000°C) et les pressions (de 0,5 à 10 KPa) sont fixées de façon à permettre une bonne diffusion des gaz et un dépôt au fond des fissures.

L'épaisseur de SiC déposée par DCPV varie de 2 à 10 µm. Cette épaisseur suffit pour fermer les fissures du revêtement externe de SiC et les porosités du carbone en fond de fissure ce qui rend la protection pratiquement étanche même à basse température (à partir de 600°C).

Selon l'invention, il est aussi possible de déposer le revêtement externe SiC par DCPV à partir des mélanges gazeux ci-dessus, à des pressions et des températures supérieures à celles utilisées pour le colmatage par SiC (typiquement 1100°C et 10 KPa).

Conformément à l'invention, toutes les techniques connues pour déposer une couche barrière entre le revêtement externe de SiC et l'oxyde tel que l'alumine peuvent être envisagées. Dans le cas particulier du nitrure d'aluminium, la couche de nitrure peut être déposée aisément par DCPV vers 950°C et donc dans des conditions identiques à celles du SiC utilisé pour le colmatage. En outre, ce matériau présente un coefficient de dilatation voisin de celui du SiC. Aussi, le dépôt d'AlN est de préfèrence effectué par DCPV. Le dépôt par DCPV de nitrure d'aluminium se fait sous pression réduite entre 0,5 et 10 KPa et sous balayage d'un gaz neutre tel que l'hélium ou l'argon.

D'autres méthodes de dépôt du nitrure d'alumine telle que la nitruration d'un revêtement d'alumine ou le dépôt physique en phase vapeur (PVD) sont également utilisables. Ainsi, les méthodes PVD telles que la pulvérisation cathodique réactive, l'évaporation réactive, la pulvérisation de nitrure d'aluminium permettent également d'obtenir des couches minces de nitrure d'aluminium. Toutefois ces méthodes présentent l'inconvénient de fournir des couches à basse température (proche de l'ambiant) qui se trouvent de ce fait fortement en compression lors de leur utilisation à haute température.

Quelles que soient les méthodes utilisées pour le dépôt de nitrure d'aluminium, ce dernier a une épaisseur de 0,5 à 5 µm.

Pour les mêmes raisons évoquées précédemment pour le nitrure d'aluminium, il est possible de déposer une couche de nitrure d'hafnium, au lieu d'AlN, par DCPV ou PVD.

Conformément à l'invention, la couche externe d'alumine est déposée sous forme alpha par DCPV et en particulier, par hydrolyse en phase gazeuse du chlorure d'aluminium. L'eau d'hydrolyse est formée in situ dans le réacteur par réaction du gaz carbonique sur l'hydrogène. Les réactions mises en jeu sont les suivantes

3 CO₂ + 3 H₂ → 3 CO + 3 H₂O

2 AlCl₃ + 3 H₂O → Al₂O₃ + 6 HCl

La réaction est essentiellement gouvernée par la production de l'eau responsable de l'hydrolyse du chlorure d'aluminium. Le dépôt est réalisé avec un rapport des pressions partielles d'hydrogène et de gaz carbonique proche de 1.

La température et la pression partielle du chlorure d'aluminium sont choisies assez faibles de façon à favoriser dans la cinétique du dépôt la diffusion des espèces réactives par rapport à la cinétique de formation de l'alumine sur la surface. De cette façon, la vitesse de dépôt est contrôlée uniquement par la vitesse de réaction chimique à la surface du matériau.

Ces conditions permettent d'obtenir un revêtement d'alumine très uniforme et bien adhérent grâce à sa capacité d'épouser parfaitement toutes les irrégularités de surface du matériau sous-jacent. Les valeurs des paramètres qui remplissent au mieux ces conditions sont :
pression totale = 4 KPa
pression de chlorure d'aluminium = 0,1 KPa
température : 1000°C.

Lors du refroidissement, les fissures existant dans le revêtement externe de SiC se reforment. Elles se referment par la suite, lors de l'utilisation du matériau composite dès que la température atteint 1000°C.

L'épaisseur d'alumine déposée varie de 2 à 100 µm selon les conditions d'utilisation prévues pour le matériau composite.

Selon l'invention, la densification du substrat poreux peut être réalisée par pyrolyse de résine thermodurcissable à haut taux de carbone ou craquage d'hydrocarbure gazeux en vue d'obtenir une matrice de carbone ou en modifiant légèrement ces procédés connus en vue d'obtenir une matrice en carbone dopé par du SiC.

A cet effet, l'apport en carbure de silicium de la matrice, dans le cas de la densification par pyrolyse d'une résine thermodurcissable, est obtenu en greffant sur les molécules du polymère des groupes fonctionnels comportant des liaisons Si-O, ces dernières fournissant lors des traitements thermiques de pyrolyse, le carbure de silicium divisé à l'échelle de la molécule. De façon avantageuse, on utilise un polymère carboné comportant 6 à 25% en poids (mesuré en SiO₂) et en particulier 10% de fonctions du type silicone (liaisons Si-O).

Comme polymères pyrolysables, on peut citer les résines phénoliques du type résol, et les résines furaniques sur lesquelles les fonctions silicones ont été greffées par réaction chimique.

La densification par résine thermodurcissable modifiée comporte plusieurs cycles comprenant chacun l'imprégnation par la résine, la polymérisation suivie d'un traitement thermique de stabilisation de la résine, d'une pyrolyse en vue de transformer la résine en coke dur puis d'un traitement thermique à haute température pour transformer des groupements Si-O en carbure de silicium.

Il est aussi possible de former la matrice composite C/SiC par DCPV en craquant à haute température un mélange formé d'au moins un hydrocarbure et d'au moins un organosilane substitué ou non par au moins un halogène. Les hydrocarbures et les organosilanes utilisables sont ceux donnés précédemment. Le pourcentage d'organosilanes varie de 1 à 8% en poids. Il dépend de la réactivité respective des gaz ou des vapeurs et/ou températures (980 à 1100°C) et pressions (0,5 à 50 KPa) utilisées.

Avantageusement, chaque fibre du substrat est revêtue d'une couche mince en carbure de silicium de 100 à 200 nm d'épaisseur afin de préserver la déformabilité du substrat pour sa mise en forme. En effet, la mise en forme est généralement faite après le dépôt de SiC sur les fibres bien qu'elle puisse être faite avant ce dépôt de SiC sur les fibres.

Cette couche de SiC sur les fibres est déposée par DCPV en utilisant les mélanges gazeux et les conditions données pour le colmatage en SiC du revêtement externe.

L'utilisation de carbure de silicium à la surface des fibres du substrat et dans la matrice permet d'assurer une protection anti-oxydation en ralentissant fortement l'oxydation à coeur du matériau composite carbone-carbone en cas de destruction accidentelle ou écaillage du revêtement externe en SiC. Ainsi, les caractéristiques et l'efficacité du matériau composite sont garanties au moins jusqu'à la fin de la mission en cours. En effet, dans certaines conditions extrêmement pénalisantes, la couche externe de SiC pourrait être interrompue par exemple sous l'effet d'un choc, d'une vibration ou d'un frottement intervenant, dans le cas particulier du domaine spatial, au cours d'un vol du véhicule.

Le ralentissement de pénétration de l'oxygène dans la matrice, dans le cas d'une pénétration accidentelle d'oxygène, est notamment dû à l'oxydation préférentielle à haute température (supérieure à 1600°C) du carbure de silicium par rapport au carbone. Cette oxydation du SiC conduit à du dioxyde de silicium qui se traduit par un accroissement de volume de la matrice en proportion du taux de SiC dans celle-ci.

Cet accroissement de volume associé à la fusion de la silice (au-dessus de 1300°C) ferme les fissures et les pores de la matrice de carbone éventuellement présents ralentissant ainsi très fortement la pénétration de l'oxygène au coeur du matériau composite et donc son oxydation.

L'oxydation préférentielle du SiC de la matrice ne se réalise que s'il se présente sous forme très divisée (la taille des grains doit être du même ordre de grandeur que l'épaisseur de la couche de SiO₂ recouvrant chaque grain, soit <50 nm).

Conformément à l'invention, la surface de chaque fibre de carbone peut être pourvue d'une couche en carbone pyrolytique au contact de la couche mince de SiC revêtant ces fibres. Cette couche de carbone pyrolytique peut être déposée avant la couche de SiC recouvrant les fibres ou après le dépôt de cette couche.

Cette couche de carbone pyrolytique constitue une interface destinée à préserver, voire à améliorer les propriétés mécaniques du matériau composite.

D'autres caractéristiques et avantages de l'invention ressortiront mieux de la description qui va suivre, donnée à titre illustratif et non limitatif en référence aux figures annexées, dans lesquelles :
- la figure 1 représente schématiquement en coupe transversale, un matériau composite selon l'invention, et
- la figure 2 est un diagramme illustrant les différentes étapes du procédé de fabrication d'un matériau selon l'invention.

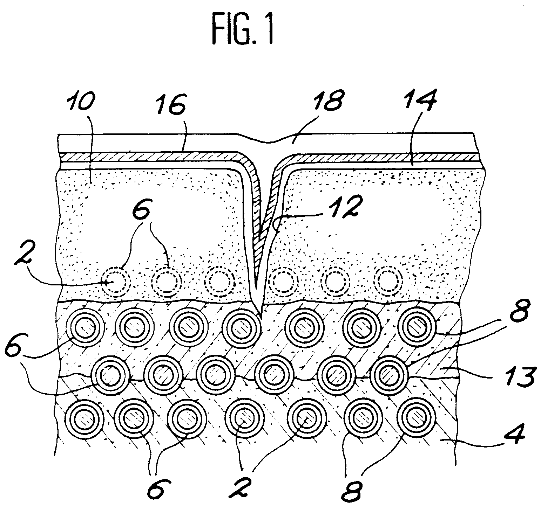

Sur la figure 1, on a représenté un matériau composite carbone-carbone comportant des fibres de renforcement 2 en carbone, noyées dans une matrice 4 en carbone pyrolytique contenant au plus 20% et par exemple de 2 à 10% en poids de carbure de silicium diminuant fortement l'oxydabilité de la matrice de carbone. Les fibres 2 sont tissées suivant trois dimensions orthogonales et ont une épaisseur de 8 µm environ.

Chaque fibre 2 est revêtue d'une couche anisotrope extrêmement mince de carbone pyrolytique, au plus égale à 100 nm et de préférence allant de 50 à 100 nm. En outre, une couche de carbure de silicium 8 ayant une épaisseur de 100 à 200 nm environ protège chaque fibre 2 d'une oxydation éventuelle en ralentissant la diffusion de l'oxygène. Cette couche de carbure de silicium peut être placée au contact direct de la fibre 2 ou bien recouvrir la couche de carbone pyrolytique 6.

Le matériau composite selon l'invention est recouvert d'un revêtement externe 10 en carbure de silicium ayant une épaisseur de 200 à 600 µm. Ce revêtement externe 10, lorsqu'il est obtenu par siliciuration, est associé à une couche sous-jacente 13 en composite de fibres de carbone et matrice de SiC, de 20 à 200 µm d'épaisseur. Autrement dit, le revêtement externe 10 s'étend au-delà de la première rangée de fibres de la matrice 4 (voire la seconde rangée), représentées en traits mixtes.

Cette continuité du matériau composite où l'on passe progressivement du composite carbone-carbone au composite carbone-carbure de silicium, assure une bonne adhésion du revêtement externe 10 en SiC.

Les fissures 12 du revêtement externe 10 en SiC sont colmatées par une couche 14 de SiC de 2 à 10 µm d'épaisseur.

Ce colmatage 14 de SiC est complété par une couche 16 de nitrure et en particulier de nitrure d'aluminium, de nitrure de bore ou de nitrure d'hafnium, de 200 à 3000 nm d'épaisseur suivant le matériau utilisé.

Le matériau composite de l'invention est revêtu d'une couche ultime 18 d'alumine alpha de 2 à 100 µm d'épaisseur.

On va maintenant donner des exemples de fabrication du matériau composite selon l'invention, représenté sur la figure 1.

### Exemple 1

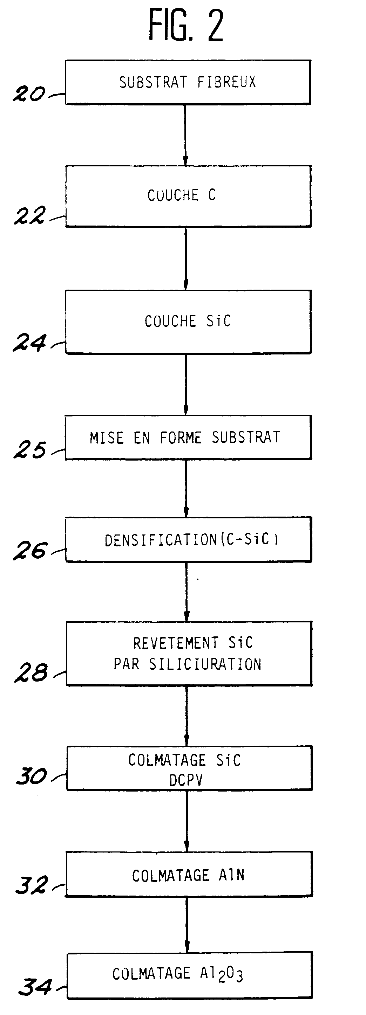

Cet exemple de fabrication va être décrit en référence à la figure 2.

La première étape du procédé, comme représenté par le bloc 20, consiste à former une structure poreuse déformable en carbone en tissant des mèches de fibres de carbone selon trois dimensions orthogonales de façon connue. Ces mèches de fibres sont formées de 3000 filaments environ de PAN de haut module du type M40-Toray.

La seconde étape du procédé, comme représenté par le bloc 22, consiste à déposer une couche anisotrope de 80 nm d'épaisseur de carbone pyrolytique sur chaque fibre. Ce carbone pyrolytique est formé par dépôt chimique en phase vapeur dans un four isotherme chauffé à 1100°C dans lequel circule du méthane sous une pression de 1,5 KPa, pendant 1 heure.

L'étape suivante du procédé, représentée par le bloc 24, consiste à déposer une couche de 150 nm environ de SiC par DCPV en utilisant un mélange de trichlorométhylsilane et d'hydrogène porté à 900°C dans un rapport de [H₂]/[CH₃SiCl₃] =8 à une pression de 10 mPa pendant 10 heures.

Le substrat ainsi obtenu est alors mis en forme, comme indiqué en 25 puis densifié en vue de former une matrice carbone dopé SiC, comme indiqué par le bloc 26 de la figure 2. A cet effet, le substrat est imprégné sous vide par une résine phénolique du type résol sur laquelle 10% de fonctions silicones ont été greffées chimiquement. Cette imprégnation est réalisée sous vide (pression inférieure à 1 KPa).

La structure imprégnée est alors polymérisée à pression atmosphérique jusqu'à une température de 200°C puis écroûtée afin d'enlever l'excès de résine. On effectue alors une pyrolyse de la résine en milieu neutre vers 800°C afin de transformer le polymère réticulé en coke dur (carbone vitreux). Un traitement thermique ultérieur entre 1200 et 1800°C permet de transformer les liaisons Si-O du polymère en SiC.

Cette phase de traitement comprenant l'imprégnation, la polymérisation, la pyrolyse et le post-traitement thermique est effectuée 5 fois de suite.

Le matériau composite atteint alors une densité de 1,45 à 1,5.

Après usinage les pièces à siliciurer (substrats mis en forme) sont immergées dans un mélange de poudres contenant en poids 10% d'Al₂O₃, 30% de Si et 60% de SiC. Ces poudres présentent une granulométrie de 30 à 60 µm et une densité apparente, après tassage de 1. La siliciuration est réalisée dans un creuset en graphite.

Le creuset avec sa charge subit alors un traitement thermique à 1700°C, sous atmosphère d'argon, pendant 1 heure. On forme ainsi le revêtement superficiel de SiC 10 de 300 à 500 µm. Cette étape de siliciuration est représentée par le bloc 28 sur la figure 2.

Les pièces, après démoulage de leur gangue de poudres, sont nettoyées et contrôlées (pesée, mesure d'épaisseur du revêtement externe de SiC par courant de Foucault) avant de recevoir le dépôt chimique en phase vapeur de SiC 14.

A cet effet, on dispose les pièces dans le four isotherme précédent maintenu à 950°C où circule, sous 1 KPa un mélange de trichlorométhylsilane et d'hydrogène dans le rapport [H₂]/[CH₃SiCl₃] = 8 pendant 2 fois deux heures ; les pièces sont retournées après les deux premières heures afin d'effectuer un dépôt de SiC 16 de 5 µm environ sur toutes les surfaces apparentes des pièces. Cette étape est représentée par le bloc 30 de la figure 2.

Après ce cycle, les pièces sont soumises au dépôt chimique en phase vapeur d'une couche de nitrure d'aluminium 16. Cette étape est représentée par le bloc 32 de la figure 2.

Ce dépôt est réalisé à 950°C, dans le même four isotherme que précédemment dans lequel circule sous 5 KPa, un mélange de chlorure d'aluminium (AlCl₃), d'hydrogène, et d'ammoniac sous balayage d'argon. Les pressions partielles de ces différents gaz sont données dans le tableau ci-après :

| | |
|---|---|
| H₂ | 3 KPa |
| NH₃ | 0,6 KPa |
| AlCl₃ | 0,1 KPa |
| Ar | 1,3 KPa |

Le dépôt est réalisé en deux cycles de deux heures. L'épaisseur moyenne de la couche de nitrure d'aluminium est de 1,5 µm.

Sur cette couche barrière de nitrure d'aluminium est alors déposée par DCPV la couche protectrice externe d'alumine 18. Cette étape est schématisée par le bloc 34. La réaction est réalisée à 950°C, dans le four précédent toujours sous 5 KPa avec un mélange de 1% d'AlCl₃, 49,5% d'H₂O, et 49,5% de CO₂ en volume.

Un dépôt d'alumine d'environ 5 µm est obtenu en deux cycles de trois heures.

### Exemple 2

Cet exemple se différencie de l'exemple 1 par le dépôt d'une couche de nitrure d'hafnium à la place du dépôt de la couche de nitrure d'aluminium. les autres étapes sont réalisées comme dans l'exemple 1.

Le dépôt d'HfN est réalisé par pulvérisation réactive sous atmosphère d'azote.

On obtient ainsi une couche de nitrure d'hafnium de 500 nm adhérent parfaitement bien sur le carbure de silicium.

### Exemple 3

Cet exemple se différencie de l'exemple 1 par la nature du substrat poreux. Les autres opérations sont identiques à celles de l'exemple 1.

Dans cet exemple, on utilise un substrat à deux dimensions formé par drapage de tissus de fibres de carbone M 40 de Toray pré-imprégnées par une résine phénolique. Après drapage sur un moule, la pièce est placée sous vessie dans laquelle on réalise le vide. La cuisson est réalisée en autoclave sous 1 MPa jusqu'à 150°C. Après démoulage et post-cuisson vers 200°C, la structure obtenue subit la pyrolyse et le post-traitement thermique déjà décrits dans l'exemple 1. La pièce obtenue est alors soumise à la densification par les 5 phases de l'exemple 1.

### Exemple 4

Dans cet exemple, on utilise un substrat poreux formé par tissage, selon trois directions orthogonales, de fibres de haute résistance du type Toray T 300.

Après dépôt de la couche de carbone et de la couche de SiC sur les fibres, comme dans l'exemple 1, on densifie le substrat par immersion dans un brai de houille suivie d'une pyrolyse à pression isostatique de 100 MPa à 800°C. Ceci conduit à une matrice formée uniquement de carbone. Cette matrice de coke n'est pas graphitée. La densité finale du matériau composite est alors de 1,8 après 6 cycles de densification.

Après usinage, les pièces sont siliciurées dans un mélange de poudres contenant 75% en poids de SiC et 25% en poids de SiO₂. La siliciuration est effectuée comme dans l'exemple 1 à 1650°C sous atmosphère d'argon pendant 1 heure.

Les autres opérations sont identiques à celles de l'exemple 1.

### Exemple 5

Cet exemple se différencie de l'exemple 1 par la technique de dépôt de la couche barrière de nitrure d'aluminium.

Dans cet exemple, on dépose tout d'abord une couche d'aluminium de 1 µm d'épaisseur par pulvérisation cathodique réactive. La pièce est alors disposée dans un four de nitruration où est réalisé un chauffage progressif sous atmosphère d'azote. La nitruration commence vers 600°C puis on chauffe progressivement la pièce jusqu'à 1200°C qui est la température où se réalise la consolidation complète de la couche de nitrure d'aluminium.

Les exemples ci-dessus sont relatifs à la protection thermique d'aéronefs rentrant à grande vitesse dans l'atmosphère. Mais bien entendu, le matériau composite de l'invention peut être utilisé dans tous secteurs industriels où l'on recherche un matériau réfractaire ou inoxydable gardant de bonnes propriétés mécaniques au-dessus de 1100°C en milieu corrosif et notamment oxydant. Aussi, suivant l'application envisagée, la durée des dépôts et des traitements thermiques, leur épaisseur ainsi que leur nombre pourront être modifiés. En outre, l'ordre des étapes du procédé peut être modifié , en particulier la mise en forme du substrat peut avoir lieu avant ou après le dépôt de carbone pyrolytique et/ou de SiC sur les fibres.

## Revendications

1. Matériau composite comportant un substrat de fibres de carbone (2) noyé dans une matrice (4), un revêtement externe (10) en carbure de silicium et un recouvrement (14, 16, 18) du revêtement externe, caractérisé en ce que le recouvrement comprend une couche externe o'oxyde choisi parmi ThO₂, ZrO₂, HfO₂, La₂O₃, Y₂O₃ et Al₂O₃ (18) et une couche intermédiaire en un composé ne contenant pas de silicium (16) servant de barrière de réaction entre le carbure de silicium et l'oxyde.

2. Matériau composite comportant un substrat de fibres de carbone (2) noyé dans une matrice (4), un revêtement externe (10) en carbure de silicium et un recouvrement (14, 16, 18) du revêtement externe, caractérisé en ce que le recouvrement comprend une couche externe d'oxyde (18) ne contenant pas de silicium et une couche intermédiaire (16) servant de barrière de réaction entre le carbure de silicium et l'oxyde, cette couche intermédiaire (16) étant choisie parmi HfC, TaC, ZrC, W₂C, NbC, ThC₂, ZrB₂, HfB₂, TiB₂, BN, HfN, ZrN, AlN, Pt, Ir, Os, Rh et Ru.

3. Matériau composite comportant un substrat de fibres de carbone (2) noyé dans une matrice (4), un revêtement externe (10) en carbure de silicium et un recouvrement (14, 16, 18) du revêtement externe, caractérisé en ce que le recouvrement comprend une couche externe d'oxyde choisi parmi ThO₂, ZrO₂, HfO₂, La₂O₃, Y₂O₃ et Al₂O₃ (18) et une couche intermédiaire (16) servant de barrière de réaction entre le carbure de silicium et l'oxyde, cette couche intermédiaire (16) étant choisie parmi HfC, TaC, ZrC, W₂C, NbC, ThC₂, ZrB₂, HfB₂, TiB₂, BN, HfN, ZrN, AlN, Pt, Ir, Os, Rh et Ru.

4. Matériau composite selon l'une quelconque des revendications 1 à 3, caractérisé en ce que l'oxyde est l'alumine.

5. Matériau composite selon l'une quelconque des revendications 1 à 4, caractérisé en ce que la couche barrière (16) est en nitrure.

6. Matériau composite selon l'une quelconque des revendications 1 à 5, caractérisé en ce que la couche barrière (16) est réalisée en un matériau choisi parmi le nitrure d'aluminium et le nitrure d'hafnium.

7. Matériau composite selon l'une quelconque des revendications 1 à 6, caractérisé en ce que le colmatage du revêtement externe comprend, en outre, un colmatage (14) en carbure de silicium.

8. Matériau composite selon l'une quelconque des revendications 1 ou 2, caractérisé en ce que le recouvrement du revêtement externe est constitué principalement d'un colmatage (14) en carbure de silicium, d'une couche barrière (16) en nitrure d'aluminium ou d'hafnium et d'un recouvrement (18) en alumine constituant le revêtement le plus externe du matériau.

9. Matériau composite selon l'une quelconque des revendications 1 à 8, caractérisé en ce que la matrice (4) est une matrice de carbone éventuellement dopé avec du carbure de silicium amorphe.

10. Matériau composite selon l'une quelconque des revendications 1 à 9, caractérisé en ce que chaque fibre (2) est revêtue d'une couche mince en carbure de silicium (6).

11. Matériau composite selon l'une quelconque des revendications 1 à 10, caractérisé en ce que chaque fibre (2) est revêtue d'une couche mince en carbone pyrolytique (8).

12. Matériau composite selon l'une quelconque des revendications 1 à 11, caractérisé en ce qu'une couche sous-jacente (13) en composite carbone-carbure de silicium est prévue sous le revêtement externe (10).

13. Procédé de fabrication d'un matériau composite comportant un substrat en fibres de carbone (2) noyé dans une matrice (4), caractérisé en ce qu'il comprend les étapes suivantes :
(a) formation d'un substrat poreux déformable, constitué de fibres de carbone (2),
(b) mise en forme du substrat,
(c) densification du substrat mis en forme pour constituer la matrice (4),
(d) recouvrement de la surface externe de la matrice par un revêtement externe (10) en carbure de silicium,
(e) dépôt d'une couche intermédiaire (16) en un composé ne contenant pas de silicium servant de barrière de réaction entre le carbure de silicium et un oxyde,
(f) recouvrement du revêtement externe (10) par une couche (18) d'oxyde choisi parmi ThO₂, ZrO₂, HfO₂, La₂O₃, Y₂O₃ et Al₂O₃.

14. Procédé de fabrication d'un matériau composite comportant un substrat en fibres de carbone (2) noyé dans une matrice (4), caractérisé en ce qu'il comprend les étapes suivantes :
(a) formation d'un substrat poreux déformable, constitué de fibres de carbone (2),
(b) mise en forme du substrat,
(c) densification du substrat mis en forme pour constituer la matrice (4),
(d) recouvrement de la surface externe de la matrice par un revêtement externe (10) en carbure de silicium,
(e) dépôt d'une couche intermédiaire (16) servant de barrière de réaction entre le carbure de silicium et un oxyde, cette couche intermédiaire (16) étant choisie parmi HfC, TaC, ZrC, W₂C, NbC, ThC₂, ZrB₂, HfB₂, TiB₂, BN, HfN, ZrN, AlN, Pt, Ir, Os, Rh et Ru,
(f) recouvrement du revêtement externe (10) par une couche (18) d'oxyde ne contenant pas de silicium.

15. Procédé de fabrication d'un matériau composite comportant un substrat en fibres de carbone (2) noyé dans une matrice (4), caractérisé en ce qu'il comprend les étapes suivantes :
(a) formation d'un substrat poreux déformable, constitué de fibres de carbone (2),
(b) mise en forme du substrat,
(c) densification du substrat mis en forme pour constituer la matrice (4),
(d) recouvrement de la surface externe de la matrice par un revêtement externe (10) en carbure de silicium,
(e) dépôt d'une couche intermédiaire (16) servant de barrière de réaction entre le carbure de silicium et un oxyde, cette couche intermédiaire (16) étant choisie parmi HfC, TaC, ZrC, W₂C, NbC, ThC₂, ZrB₂, HfB₂, TiB₂, BN, HfN, ZrN, AlN, Pt, Ir, Os, Rh et Ru,
(f) recouvrement du revêtement externe (10) par une couche (18) d'oxyde choisi parmi ThO₂, ZrO₂, HfO₂, La₂O₃, Y₂O₃ et Al₂O₃.

16. Procédé de fabrication selon l'une quelconque des revendications 13 à 15, caractérisé en ce que l'on densifie le substrat par un matériau à base de carbone renfermant éventuellement du carbure de silicium finement divisé.

17. Procédé de fabrication selon la revendication 16, caractérisé en ce que la densification consiste à pyrolyser un polymère carboné comportant des groupes fonctionnels présentant des liaisons Si-O.

18. Procédé de fabrication selon l'une quelconque des revendications 13 à 17, caractérisé en ce que le revêtement externe (10) est obtenu par siliciuration de la surface externe de la structure densifiée.

19. Procédé de fabrication selon l'une quelconque des revendications 13 à 18, caractérisé en ce que la couche barrière (16) est réalisée en un matériau choisi parmi le nitrure d'aluminium, le nitrure de bore et le nitrure d'hafnium.

20. Procédé de fabrication selon l'une quelconque des revendications 13 à 19, caractérisé en ce que l'oxyde est l'alumine.

21. Procédé de fabrication selon l'une quelconque des revendications 13 à 19, caractérisé en ce que l'on réalise un colmatage (14) du revêtement externe (10) avec du carbure de silicium.

22. Procédé de fabrication selon la revendication 21, caractérisé en ce que le colmatage (14) en carbure de silicium est obtenu par dépôt chimique en phase vapeur éventuellement assisté-plasma d'un mélange contenant au moins un organosilane substitué ou non par au moins un halogène et éventuellement au moins un composé choisi parmi l'hydrogène et un hydrocarbure.

23. Procédé de fabrication selon l'une quelconque des revendications 13 à 20, caractérisé en ce que l'on recouvre chaque fibre du substrat poreux par une couche mince (6) de carbure de silicium.

24. Procédé de fabrication selon l'une quelconque des revendications 13 à 23, caractérisé en ce que l'on recouvre chaque fibre du substrat poreux par une couche mince (8) de carbone pyrolytique.

## Claims

1. Composite material incorporating a carbon fibre substrate (2) embedded in a matrix (4), an outer silicon carbide layer (10) and a covering (14,16,18) for the outer layer, characterized in that the covering comprises an outer oxide coating chosen from among ThO₂, ZrO₂, HfO₂, La₂O₃, Y₂O₃ and Al₂O₃ (18) and an intermediate coating of a compound not containing silicon (16) serving as a reaction barrier between the silicon carbide and the oxide.

2. Composite material incorporating a carbon fibre substrate (2) embedded in a matrix (4), an outer silicon carbide layer (10) and a covering (14,16,18) for the outer layer, characterized in that the covering comprises an outer oxide coating (18) not containing silicon and an intermediate coating (16) serving as a reaction barrier between the silicon carbide and the oxide, said intermediate coating (16) being chosen from among HfC, TaC, ZrC, W₂C, NbC, ThC₂, ZrB₂, HfB₂, TiB₂, BN, HfN, ZrN, AlN, Pt, Ir, Os, Rh and Ru.

3. Composite material incorporating a carbon fibre substrate (2) embedded in a matrix (4), an outer silicon carbide layer (10) and a covering (14,16,18) for the outer layer, characterized in that the covering comprises an outer oxide coating chosen from among ThO₂, ZrO₂, HfO₂, La₂O₃, Y₂O₃ and Al₂O₃ (18) and an intermediate coating (16) serving as the reaction barrier between the silicon carbide and the oxide, said intermediate coating (16) being chosen from among HfC, TaC, ZrC, W₂C, NbC, ThC₂, ZrB₂, HfB₂, TiB, BN, HfN, ZrN, AlN, Pt, Ir, Os, Rh and Ru.

4. Composite material according to any one of the claims 1 to 3, characterized in that the oxide is alumina.

5. Composite material according to any one of the claims 1 to 4, characterized in that the barrier layer (16) is of nitride.

6. Composite material according to any one of the claims 1 to 5, characterized in that the barrier layer (16) is of a material chosen from among aluminium nitride and hafnium nitride.

7. Composite material according to any one of the claims 1 to 6, characterized in that the sealing of the outer layer also comprises a silicon carbide sealing coating (14).

8. Composite material according to claims 1 or 2, characterized in that the covering of the outer layer is mainly constituted by a silicon carbide sealing coating (14), a barrier layer (16) of hafnium or aluminium nitride and an alumina covering (18) constituting the outermost layer of the material.

9. Composite material according to any one of the claims 1 to 8, characterized in that the matrix (4) is a carbon matrix optionally doped with amorphous silicon carbide.

10. Composite material according to any one of the claims 1 to 9, characterized in that each fibre (2) is coated with a silicon carbide film (6).

11. Composite material according to any one of the claims 1 to 10, characterized in that each fibre (2) is coated with a pyrolytic carbon film (8).

12. Composite material according to any one of the claims 1 to 11, characterized in that an underlying carbon-silicon carbide composite layer (13) is provided beneath the outer layer (10).

13. Process for producing a composite material having a carbon fibre substrate (2) embedded in a matrix (4), characterized in that it comprises the following stages:
(a) formation of a deformable porous substrate constituted by carbon fibres (2),
(b) shaping the substrate,
(c) densification of the shaped substrate for forming the matrix (4),
(d) covering the outer surface of the matrix with an outer silicon carbide layer (10),
(e) deposition of an intermediate coating (16) of a compound not containing silicon serving as a reaction barrier between the silicon carbide and an oxide,
(f) covering the outer layer (10) by an oxide coating (18) chosen from among ThO₂, ZrO₂, HfO₂, La₂O₃, Y₂O₃ and Al₂O₃.

14. Process for the production of a composite material incorporating a carbon fibre substrate (2) embedded in a matrix (4), characterized in that it comprises the following stages:
(a) forming a deformable porous substrate constituted by carbon fibres (2),
(b) shaping the substrate,
(c) densification of the shaped substrate to constitute the matrix (4),
(d) covering the outer surface of the matrix with an outer silicon carbide layer (10),
(e) deposition of an intermediate coating (16) serving as a reaction barrier between the silicon carbide and an oxide, said intermediate coating (16) being chosen from among HfC, TaC, ZrC, W₂C, NbC, ThC₂, ZrB₂, HfB₂, TiB₂, BN, HfN, ZrN, AlN, Pt, Ir, Os, Rh and Ru,
(f) covering the outer layer (10) by an oxide coating (18) not containing silicon.

15. Process for the production of a composite material incorporating a carbon fibre substrate (2) embedded in a matrix (4), characterized in that it comprises the following stages:
(a) forming a deformable porous substrate constituted by carbon fibres (2),
(b) shaping the substrate,
(c) densification of the shaped substrate to constitute the matrix (4),
(d) covering the outer surface of the matrix with an outer silicon carbide layer (10),
(e) deposition of an intermediate coating (16) serving as a reaction barrier between the silicon carbide and an oxide, said intermediate coating (16) being chosen from among HfC, TaC, ZrC, W₂C, NbC, ThC₂, ZrB₂, HfB₂, TiB₂, BN, HfN, ZrN, AlN, Pt, Ir, Os, Rh and Ru,
(f) covering the outer layer (10) by an oxide coating (18) chosen from among ThO₂, ZrO₂, HfO₂, La₂O₃, Y₂O₃ and Al₂O₃.

16. Production process according to any one of the claims 13 to 15, characterized in that the substrate is densified by a carbon-based material optionally containing finely divided silicon carbide.

17. Production process according to claim 16, characterized in that the densification consists of pyrolyzing a carbon-containing polymer having functional groups with Si-O bonds.

18. Production process according to any one of the claims 13 to 17, characterized in that the outer layer (10) is obtained by siliciding the outer surface of the densified structure.

19. Production process according to any one of the claims 13 to 18, characterized in that the barrier coating (16) is produced from a material chosen from among aluminium nitride, boron nitride and hafnium nitride.

20. Production process according to any one of the claims 13 to 19, characterized in that the oxide is alumina.

21. Production process according to any one of the claims 13 to 19, characterized in that the outer layer (10) is sealed (14) with silicon carbide.

22. Production process according to claim 21, characterized in that the silicon carbide sealing coating (14) is obtained by optionally plasma-assisted chemical vapour phase deposition of a mixture containing at least one organosilane substituted or not by at least one halogen and optionally at least one compound chosen from among hydrogen and a hydrocarbon.

23. Production process according to any one of the claims 13 to 20, characterized in that each fibre of the porous substrate is covered by a silicon carbide film (6).

24. Production process according to any one of the claims 13 to 23, characterized in that each fibre of the porous substrate is covered by a pyrolytic carbon film (8).

## Patentansprüche

1. Kompositmaterial, das ein in eine Matrix (4) gebettetes Substrat aus Kohlenstoffasern (2), einen Außenüberzug (10) aus Siliziumkarbid und eine Beschichtung (14, 16, 18) des Außenüberzugs enthält,
dadurch **gekennzeichnet,**
daß die Beschichtung eine Außenschicht aus Oxid aufweist, ausgewählt aus ThO₂, ZrO₂, HfO₂, La₂O₃, Y₂O₃ und Al₂O₃ (18) und eine Zwischenschicht aus einer Verbindung, die kein Silizium enthält (16), die als Reaktionssperre dient zwischen dem Siliziumkarbid und dem Oxid.

2. Kompositmaterial, das ein in eine Matrix (4) gebettetes Substrat aus Kohlenstoffasern (2), einen Außenüberzug (10) aus Siliziumkarbid und eine Beschichtung (14, 16, 18) des Außenüberzugs enthält, dadurch gekennzeichnet, daß die Beschichtung eine äußere Oxidschicht (18) aufweist, die kein Silizium enthält und eine als Reaktionssperre (16) zwischen dem Siliziumkarbid und dem Oxid dienende Zwischenschicht, wobei diese Zwischenschicht (16) ausgewählt wird aus HfC, TaC, ZrC, W₂C, NbC, ThC₂, ZrB₂, HfB₂, TiB₂, BN, HfN, ZrN, AlN, Pt, Ir, Os, Rh und Ru.

3. Kompositmaterial, das ein in eine Matrix (4) gebettetes Substrat aus Kohlenstoffasern (2), einen Außenüberzug (10) aus Siliziumkarbid und eine Beschichtung (14, 16, 18) des Außenüberzugs enthält, dadurch gekennzeichnet, daß die Beschichtung eine äußere Oxidschicht (18) aufweist, ausgewählt aus ThO₂, ZrO₂, HfO₂, La₂O₃, Y₂O₃ und Al₂O₃ (18) und eine Zwischenschicht (16), die als Reaktionssperre zwischen dem Siliziumkarbid und dem Oxid dient, wobei diese Zwischenschicht (16) ausgewählt wird aus HfC, TaC, ZrC, W₂C, NbC, ThC₂, ZrB₂, HfB₂, TiB₂, BN, HfN, ZrN, AlN, Pt, Ir, OS, Rh und Ru.

4. Kompositmaterial nach einem der Ansprüche 1 bis 3, dadurch gekennzeichnet, daß das Oxid Aluminiumoxid ist.

5. Kompositmaterial nach einem der Ansprüche 1 bis 4, dadurch gekennzeichnet, daß die Sperrschicht (16) aus Nitrid ist.

6. Kompositmaterial nach einem der Ansprüche 1 bis 5, dadurch gekennzeichnet, daß die Sperrschicht (16) hergestellt wird aus einem Material, gewählt zwischen dem Aluminiumnitrid und dem Hafniumnitrid.

7. Kompositmaterial nach einem der Ansprüche 1 bis 6, dadurch gekennzeichnet, daß die Abdichtung des Außenüberzugs außerdem eine Abdichtung (14) aus Siliziumkarbid aufweist.

8. Kompositmaterial nach einem der Ansprüche 1 oder 2, dadurch gekennzeichnet, daß die Beschichtung des Außenüberzugs im wesentlichen besteht aus einer Abdichtung (14) aus Siliziumkarbid, einer Trennschicht (16) aus Aluminium- oder Hafniumnitrid und einer Beschichtung (18) aus Aluminiumoxid, das den äußersten Überzug des Materials bildet.

9. Kompositmaterial nach einem der Ansprüche 1 bis 8, dadurch gekennzeichnet, daß die Matrix (4 ) eine Kohlenstoffmatrix ist, die eventuell dotiert ist mit amorphem Siliziumkarbid

10. Kompositmaterial nach einem der Ansprüche 1 bis 9, dadurch gekennzeichnet, daß jede Faser (2) beschichtet ist mit einer dünnen Siliziumkarbidschicht (6).

11. Kompositmaterial nach einem der Ansprüche 1 bis 10, dadurch gekennzeichnet, daß jede Faser (2) überzogen ist mit einer dünnen Schicht aus pyrolitischem Kohlenstoff (8).

12. Kompositmaterial nach einem der Ansprüche 1 bis 11, dadurch gekennzeichnet, daß eine darunter liegende Schicht (13) aus Kohlenstoff-Siliziumkarbid vorgesehen ist unter dem Außenüberzug (10).

13. Herstellungsverfahren eines Kompositmaterials, das ein in eine Matrix (4) gebettetes Substrat aus Kohlenstoffasern (2) enthält, dadurch gekennzeichnet, daß es die folgenden Fertigungsschritte umfaßt :
(a) Bildung eines verformbaren, porösen Substrats aus Kohlenstoffasern (2) ,
(b) Formung des Substrats,
(c) Verdichtung des geformten Substrats zur Bildung der Matrix (4),
(d) Beschichtung der Außenfläche der Matrix mit einem Außenüberzug (10) aus Siliziumkarbid,
(e) Aufbringung einer Zwischenschicht (16) aus einer kein Silizium enthaltenden Verbindung, die als Reaktionssperre dient zwischen dem Siliziumkarbid und einem Oxid,
(f) Beschichtung des Außenüberzugs (10) durch eine Schicht (18) eines Oxids, ausgewählt aus ThO₂, ZrO₂, HfO₂, La₂O₃, Y₂O₃ und Al₂O₃.

14. Herstellungsverfahren eines Kompositmaterials, das ein in eine Matrix (4) gebettetes Substrat aus Kohlenstoffasern (2) enthält, dadurch gekennzeichnet, daß es die folgenden Fertigungsschritte umfaßt :
(a) Bildung eines verformbaren, porösen Substrats aus Kohlenstoffasern (2),
(b) Formung des Substrats,
(c) Verdichtung des geformten Substrats zur Bildung der Matrix (4),
(d) Beschichtung der Außenfläche der Matrix mit einem Außenüberzug (10) aus Siliziumkarbid,
(e) Aufbringung einer Zwischenschicht (16) aus einer kein Silizium enthaltenden Verbindung, die als Reaktionssperre dient zwischen dem Siliziumkarbid und einem Oxid, wobei diese Zwischenschicht (16) ausgewählt wird aus HfC, TaC, ZrC, W₂C, NbC, ThC₂, ZrB₂, HfB₂, TiB₂, BN, HfN, ZrN, AlN, Pt, Ir, Os, Rh und Ru.
(f) Beschichtung des Außenüberzugs (10) mit einer Oxidschicht (18), die kein Silizium enthält.

15. Herstellungsverfahren eines Kompositmaterials, das ein in eine Matrix (4) gebettetes Substrat aus Kohlenstoffasern (2) enthält, dadurch gekennzeichnet, daß es die folgenden Fertigungsschritte umfaßt :
(a) Bildung eines verformbaren, porösen Substrats aus Kohlenstoffasern (2),
(b) Formung des Substrats,
(c) Verdichtung des geformten Substrats zur Bildung der Matrix (4),
(d) Beschichtung der Außenfläche der Matrix mit einem Außenüberzug (10) aus Siliziumkarbid,
(e) Aufbringung einer Zwischenschicht (16) aus einer kein Silizium enthaltenden Verbindung, die als Reaktionssperre dient zwischen dem Siliziumkarbid und einem Oxid, wobei diese Zwischenschicht (16) ausgewählt wird aus HfC, TaC, ZrC, W₂C, NbC, ThC₂, ZrB₂, HfB₂, TiB₂, BN, HfN, ZrN, AlN, Pt, Ir, Os, Rh und Ru,
(f) Beschichtung des Außenüberzugs (10) mit einer Oxidschicht (18), ausgewählt aus ThO₂, ZrO₂, HfO₂, La₂O₃, Y₂O₃ und Al₂O₃.

16. Kompositmaterial nach einem der Ansprüche 13 bis 15, dadurch gekennzeichnet, daß man das Substrat durch ein Material auf Kohlenstoffbasis verdichtet, das eventuell fein verteiltes Siliziumkarbid enthält.

17. Herstellungsverfahren nach Anspruch 16, dadurch gekennzeichnet, daß die Verdichtung darin besteht, ein kohlenstoffhaltiges Polymer, das funktionelle Gruppen enthält, die Si-O-Verbindungen aufweisen, zu pyrolisieren.

18. Kompositmaterial nach einem der Ansprüche 13 bis 17, dadurch gekennzeichnet, daß der Außenüberzug (10) erzeugt wird durch Silizierung der Außenfläche der verdichteten Struktur.

19. Kompositmaterial nach einem der Ansprüche 13 bis 18, dadurch gekennzeichnet, daß die Trennschicht (16) hergestellt wird aus einem Material, ausgewählt unter dem Aluminiumnitrat, dem Bornitrat und dem Hafniumnitrat.

20. Kompositmaterial nach einem der Ansprüche 13 bis 19, dadurch gekennzeichnet, daß das Oxid Aluminiumoxid ist.

21. Kompositmaterial nach einem der Ansprüche 13 bis 19, dadurch gekennzeichnet, daß man eine Abdichtung (14) des Außenüberzugs (10) mit Siliziumkarbid herstellt.

22. Herstellungsverfahren nach Anspruch 21, dadurch gekennzeichnet, daß die Abdichtung (14) aus Siliziumkarbid erzielt wird durch chemische Abscheidung in der Dampfphase eventuell plasmaunterstützt von einer Mischung, die wenigstens ein Organosilan enthält, substituiert oder nicht durch wenigstens ein Halogen und eventuell wenigstens eine Verbindung, ausgewählt aus dem Wasserstoff und einem Kohlenwasserstoff.

23. Kompositmaterial nach einem der Ansprüche 13 bis 20, dadurch gekennzeichnet, daß man jede Faser des porösen Substrats mit einer dünnen Schicht (6) aus Siliziumkarbid überzieht.

24. Kompositmaterial nach einem der Ansprüche 13 bis 23, dadurch gekennzeichnet, daß man jede Faser des porösen Substrats mit einer dünnen Schicht (8) aus pyrolytischem Kohlenstoff überzieht.
